# EUROPEAN PATENT APPLICATION

(11) **EP 3 131 184 A1**
(43) Date of publication of application: **15.02.2017**
(21) Application number: 14888625.2
(22) Date of filing: 10.10.2014
(51) Int. Cl.: H02K 7/00, H02K 7/116, B62M 11/14

(54) **ELECTRIC BICYCLE WHEEL HUB MOTOR DEVICE**

(30) Priority: 11.04.2014 CN 201410145608
(71) Applicant: Suzhou Bafang Electric Motor Science Technology Co. Ltd, Suzhou City 215122 (CN)
(72) Inventor: HE, Xianbing, Suzhou Jiangsu 215122 (CN); WANG, Haihua, Suzhou Jiangsu 215122 (CN); ZHOU, Qi, Suzhou Jiangsu 215122 (CN); DING, Jun, Suzhou Jiangsu 215122 (CN); XU, Dajun, Suzhou Jiangsu 215122 (CN)
(74) Representative: Gulde & Partner
(86) International application number: PCT/CN2014/088265
(87) International publication number: WO 2015/154400

(57) **Abstract**

An electric-bike hub motor means, comprising a horizontally arranged spindle (1), a hub shell (2) that is rotatably mounted outside the spindle (1), a stator (3) and a rotor (4) that are arranged inside the hub shell (2), and a gear speed reduction mechanism, with the stator (3) secured on the spindle (1). The gear reduction mechanism comprises a rotor gear (5) that is secured to the rotor (4) and arranged coaxially outside the spindle (1), a planetary carrier (6) that is secured on the hub shell (2) and sleeved outside the spindle (1), a planetary shaft (7) that goes rotatably through the planetary carrier (6), a left planetary gear (8) and a right planetary gear (9) that are secured on the planetary shaft (7), and a sun gear (10) that is secured and sleeved on the spindle (1), wherein the left planetary gear (8) engages with the rotor gear (5), and the right planetary gear (9) engages with the sun gear (10). The electric-bike hub motor means has a large output torque and internal transmission function.

## Description

### FIELD OF THE INVENTION

The present invention relates to a hub motor, which is applicable to an electromobile, especially an electric bike.

### BACKGROUND OF THE INVENTION

An existing ordinary hub motor generally comprises a spindle, a wound stator, a rotor, a sun gear, a reduction assembly, a hub shell, a planetary reduction mechanism, a unidirectional clutch and other components, referring to Chinese utility model patent No. ZL201220268825.8 for its detailed structure. When the motor is energized to work, the wound stator and the rotor generate power source to drive the rotor to rotate, and the rotor gear on the rotor drives the planetary reduction system and the unidirectional clutch to rotate, which transmit torque to the hub directly via an inner gear ring secured on the hub to make the hub rotate. The planetary reduction mechanism used in such a hub motor has shortcomings of small reduction ratio and output torque.

Besides, a traditional hub motor, limited by its function and structure, can only be used in conjunction with an external gearbox, has complex appearance, is unesthetic, has interior space unreasonably used, and cannot be implanted into an internal transmission system to better drive the electric bike.

### CONTENTS OF THE INVENTION

A purpose of the present invention is to provide a hub motor that has a large output torque and an internal transmission function, so as to solve the above problems.

A technical solution of the present invention is as follows: An electric-bike hub motor means is provided, comprising a horizontally arranged spindle, a hub shell that is rotatably mounted outside the spindle, a stator and a rotor arranged inside the hub shell, and a gear speed reduction mechanism, wherein the stator is secured on the spindle; the gear speed reduction mechanism comprises a rotor gear that is secured to the rotor and arranged coaxially outside the spindle, a planetary carrier that is secured on the hub shell and sleeved outside the spindle, a planetary shaft that goes rotatably through the planetary carrier, a left planetary gear and a right planetary gear that are secured on the planetary shaft, and a sun gear that is secured and sleeved on the spindle, wherein the left planetary gear engages with the rotor gear, and the right planetary gear engages with the sun gear.

Preferably, the sun gear is a unidirectional clutch that has a clutch inner ring and a clutch outer ring locked unidirectionally thereto, wherein the clutch inner ring is secured to the spindle, and an outer gear ring engaging with the right planetary gear is provided on the clutch outer ring.

Preferably, the outer gear ring is integrated with the clutch outer ring.

Preferably, the planetary shaft is provided with at least two right planetary gears that are different in diameter; the clutch outer ring is provided with a plurality of outer gear rings engaging in one-to-one correspondence with the respective right planetary gears, with these outer gear rings sleeved rotatably circumferentially around and secured axially to the clutch outer ring; and a locking mechanism is also provided between the clutch outer ring and the outer gear ring that can secure them both together circumferentially.

Preferably, the clutch outer ring extends at its right end out of the hub shell and has a chain wheel, and a second unidirectional clutch is provided between the rotor gear and the spindle.

Preferably, the locking mechanism comprises a sliding bush that can be slidably sleeved axially on the spindle, and a sliding positioning means that is used to drive the sliding bush to slide axially on the spindle and can position the sliding bush axially on the spindle, with the sliding bush housed in the clutch outer ring; the clutch outer ring is provided in a position corresponding to each of the outer gear rings with a radial through hole, where a leaf spring locked on the clutch outer ring is provided; the leaf spring is provided outside with a roller that is locked thereto, and is provided inside with a ball that is located in the radial through hole and can be moved radially along the same; the outer gear ring is provided with a fit groove corresponding to the roller; the sliding bush is provided with a rim that, when the sliding bush slides axially on the spindle, can be moved outward along the radial through hole by abutting the ball and then press the leaf spring to deform it, such that the roller secured on the leaf spring is moved into the fit groove, thereby making the clutch gear ring secured to the clutch outer ring circumferentially.

Preferably, the sliding positioning means comprises a setting bolt spring sleeved on the spindle and sandwiched between the spindle and the sliding bush, a central axle hole provided on the spindle, a thimble arranged in the central axle hole and connected with the sliding bush, and a paddle that is fitted in contact with the thimble and used for toggling the thimble to make it move axially in the central axle hole, with the paddle connected in transmission with a gear change hand lever on the electric-bike handlebar through a transmission line.

Preferably, the sliding positioning means is an electromagnetic valve.

Preferably, a secondary planetary gear smaller than the respective right planetary gears in diameter is also fixed on the planetary shaft, and a secondary outer gear ring engaging with the secondary planetary gear is sleeved on the clutch outer ring, with the secondary outer gear ring connected to the clutch outer ring through a third unidirectional clutch.

Preferably, between the sliding bush and the spindle is provided a supporting bearing, which has relatively rotatable bearing inner ring and bearing outer ring, the sliding bush being axially slidably sleeved on the bearing outer ring, the bearing inner ring being secured on the spindle.

The present invention has the following advantages:
1. The hub motor means of the present invention is not provided with an inner gear ring secured on the hub shell as the traditional technology, but has a planetary carrier directly secured on the hub shell, and drives the hub to rotate through rotation of the planetary carrier, thus obtaining a set of single two-stage gear reduction transmission system, achieving the output function of large reduction ratio and torque, increasing work efficiency of the motor, reducing the amount of magnetic materials of a DC motor, and reducing costs.
2. For the hub motor means of the present invention, when the motor is energized to work, a cyclist can also provide the impetus for the operation of the motor by pedaling a bike pedal, with the amount of the artificial impetus adjustable.
3. For the hub motor means of the present invention, when the motor is powered off to leave the bike in the riding state, the cyclist can also drive the hub to rotate forward by pedaling the bike pedal, with the amount of the artificial impetus adjustable.

### BRIEF DESCRIPTION OF THE DRAWINGS

The present invention will be further described below with reference to drawings and examples.
Fig. 1 is a structural schematic view (partial sectional view) of the electric-bike hub motor means in Example 1 of the present invention;
Fig. 2 is a structural schematic view (partial sectional view) of the electric-bike hub motor means in Example 2 of the present invention;
Fig. 3 is a structural schematic view (partial sectional view) of the electric-bike hub motor means in Example 3 of the present invention;
Fig. 4 is a structural schematic view (partial sectional view) of the electric-bike hub motor means in Example 4 of the present invention;
Fig. 5 is a structural schematic view (partial sectional view) of the electric-bike hub motor means in Example 5 of the present invention;
Fig. 6 is a partial structural schematic view of the electric-bike hub motor means in Example 5; and
Fig. 7 is another partial structural schematic view of the electric-bike hub motor means in Example 5.

List of reference numbers: 1. A spindle; 2. a hub shell; 2a. a shell body; 2b. a shell end cover; 3. a stator; 4. a rotor; 5. a rotor gear; 6. a planetary carrier; 7. a planetary shaft; 8. a left planetary gear; 9. a right planetary gear; 10. a sun gear; 10a. a clutch inner ring; 10b. a clutch outer ring; 10c. an outer gear ring; 10d. a secondary outer gear ring; 11. a second unidirectional clutch; 12. a chain wheel; 13. a third unidirectional clutch; 13. a swivel gear; 14. a sliding bush; 14a. a rim; 15. a roller; 16. a thimble; 17. a setting bolt spring; 18. a central axle hole; 19. an external gearbox; 20. a secondary planetary gear; and 22. a leaf spring.

### DETAILED DESCRIPTION OF THE EMBODIMENTS

### Example 1:

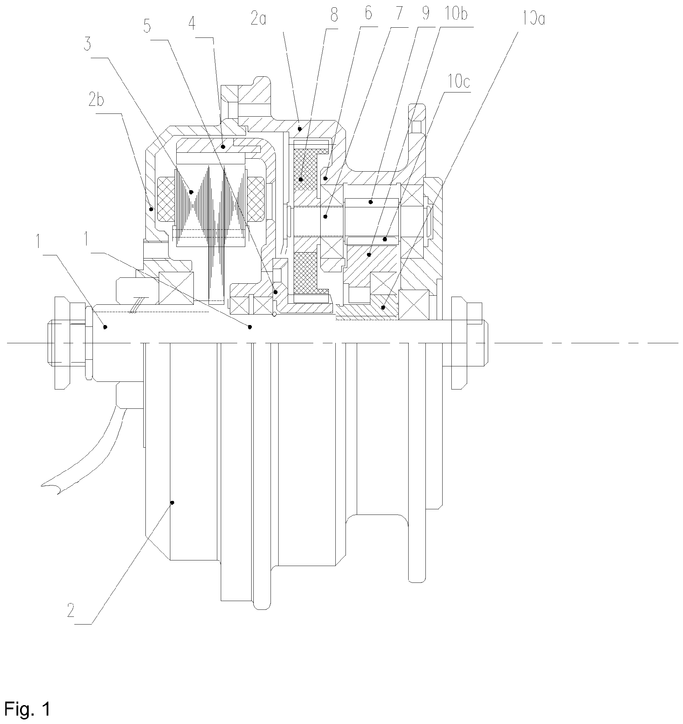

Fig. 1 shows a specific example of this electric-bike hub motor means of the present invention, which comprises a horizontally arranged spindle 1 provided with a hub shell 2, with the hub shell 2 able to be rotated around this spindle through a bearing (not labeled in the drawing) and composed of a shell body 2a and a shell end cover 2b secured to each other. The hub shell 2 is provided inside with a stator 3, a rotor 4 and a gear speed reduction mechanism, wherein the stator is secured on the spindle 1, with an outer-rotor inner-stator structure adopted in this example.

The key improvement of this example is that the gear speed reduction mechanism is totally different from a traditional one in structure, which is specifically as follows:
The gear speed reduction mechanism in this example is mainly composed of a rotor gear 5, a planetary carrier 6, a planetary shaft 7, a left planetary gear 8, a right planetary gear 9 and a sun gear 10. Wherein the rotor gear 5 is rotatably coaxially sleeved on the spindle 1 and secured to the rotor 4, with a bearing (not labeled in the drawing) provided between the rotor gear 5 and the spindle 1 for supporting. The planetary carrier 6 can be sleeved rotatably and circumferentially outside the spindle 1, and can be secured to the inner wall of the hub shell 2. The planetary shaft 7, disposed in parallel with the spindle 1, goes rotatably through the planetary carrier 6 through a bearing (not labeled in the drawing). There may be one or more planetary shafts 7, with three planetary shafts (only one being visible in the drawing) in this example. With the left planetary gear 8 and the right planetary gear 9 equal to the planetary shaft 7 in number, the left planetary gear 8 is greater than the right planetary gear 9 in diameter, and the left planetary gear 8 and the right planetary gear 9 are both secured on the planetary shaft 7. The sun gear 10 is secured on the spindle 1. The left planetary gear 8 engages with the rotor gear 5, and the right planetary gear 9 engages with the sun gear 10. If the reduction ratio of this gear speed reduction mechanism needs to be further increased, a corresponding reduction transmission means can also be added between the rotor gear 5 and the left planetary gear 8.

While in operation, the motor is energized to make the rotor 4 rotate counterclockwise in the right viewing direction shown in Fig. 1, and the rotor 4 drives the rotor gear 5 to rotate counterclockwise around the spindle 1 and then transmits the rotation torque of the motor to the planetary carrier 6, making the planetary carrier 6 and the hub shell 2 rotate clockwise together around the spindle 1, then driving the electric bike to go forward, with the right planetary gear 9 rotated clockwise around the sun gear 10.

In this example, the sun gear 10 is a unidirectional clutch having the existing conventional structure, which includes a clutch inner ring 10a and a clutch outer ring 10b locked unidirectionally thereto, wherein the clutch inner ring 10a is secured to the spindle 1 through the locking key (while the clutch outer ring 10b is not connected to the spindle 1 directly), and the clutch outer ring 10b is provided with an outer gear ring 10c engaging with the right planetary gear 9. In this example the outer gear ring 10c is integrated with the clutch outer ring 10b. There is the following advantage for the sun gear 10 to have the above structure: In the case of no electricity or the pedal-driven speed faster than the motor-driven speed, when the electric bike is going forward, the clutch outer ring 10b will be rotated freely around the clutch inner ring 10a and basically will not drive the rotor 4 to rotate, which then reduces the forward resistance of the electric bike.

### Example 2:

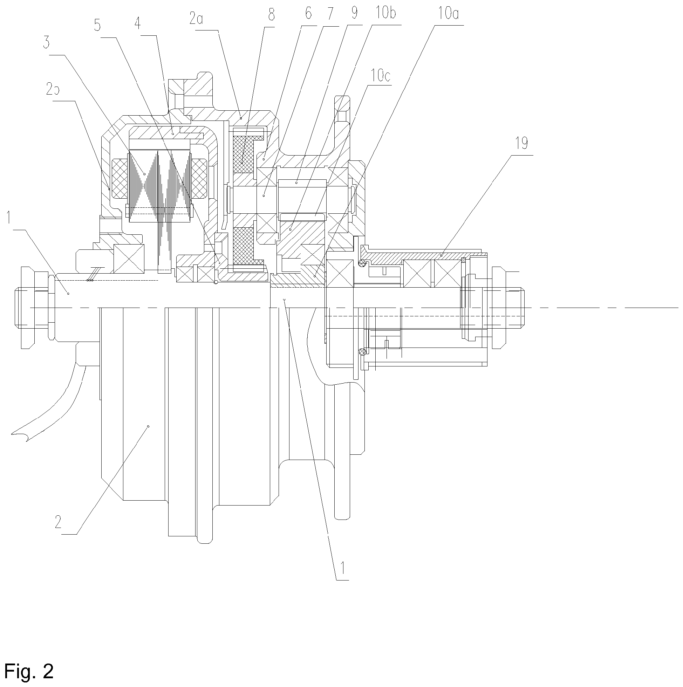

Fig. 2 shows another specific example of this electric-bike hub motor means of the present invention, which is improved on the basis of the structure of Example 1, with the main improvements as follows:
In this hub motor means, by changing the structure of the axle hole at the right end of the hub shell 2 on the basis of Fig. 1, an outer gearbox 19 used for assembling a multi-stage transmission sprocket is mounted between the hub shell 2 and the spindle 1 (a conventional structure), thus obtaining an outer transmission hub motor with a large reduction ratio. When the motor is not energized, adjusting the outer gearbox 19 can achieve the traditional multi-stage transmission function of the variable speed bike.

### Example 3:

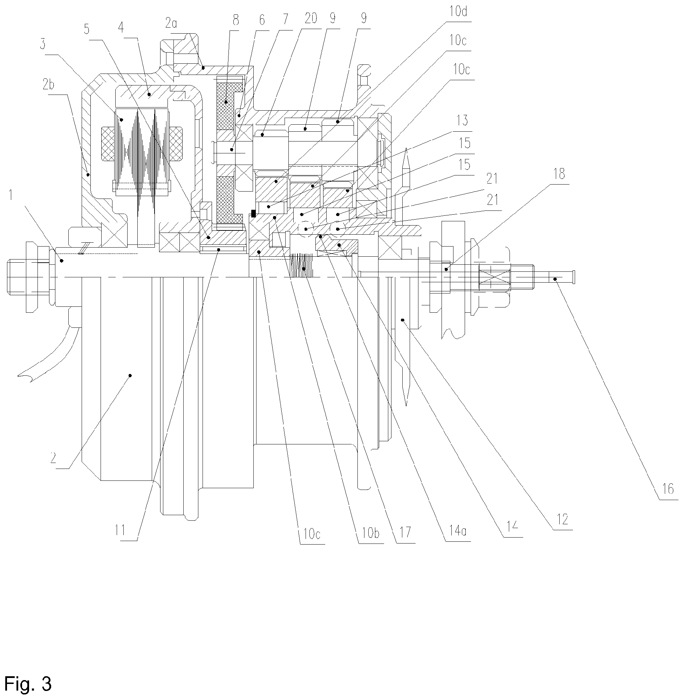

Fig. 3 shows a third specific example of this electric-bike hub motor means of the present invention, which is improved on the basis of the structure of Example 1, with the main improvements as follows:
In this example, the planetary shaft 7 is provided with two right planetary gears 9 in all that are different in diameter, with the diameter in Fig. 3 increasing from left to right. The clutch outer ring 10b is provided with two outer gear rings 10c engaging in one-to-one correspondence with the two right planetary gears 9. These outer gear rings 10c are not integrated with the clutch outer ring 10b as in Example 1, but can be sleeved rotatably circumferentially on and secured axially to the clutch outer ring 10b. Besides, a locking mechanism is also provided between the clutch outer ring 10b and the outer gear ring 10c that can secure them both together circumferentially. It needs to be noted that, the number of the outer gear ring 10c and the right planetary gear 9 is not limited to two, but can also be three, four, five ....

After this hub motor is mounted in the rear bike wheel, in order to make the bike have the power-off cycling function, this example also has the following structure: The clutch outer ring 10b extends at its right end out of the hub shell 2 and has a chain wheel 12, and a second unidirectional clutch 11 is provided between the rotor gear 5 and the spindle 1. This second unidirectional clutch 11 also has the conventional structure, which comprises an inner ring and an outer ring locked unidirectionally thereto, with the second unidirectional clutch secured at its inner ring to the spindle 1 and secured at its outer ring to the rotor gear 5, thus only allowing unidirectional rotation instead of bidirectional rotation of the rotor gear 5 around the spindle 1.

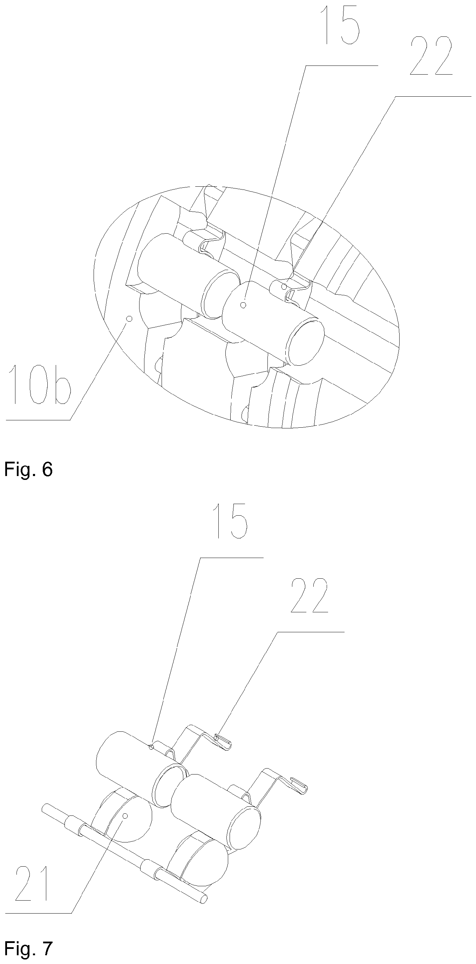

The locking mechanism having the above function can have various structures well known in the mechanical field. In this example, the locking mechanism has the following structure: As shown in Figs. 3, 6 and 7, the locking mechanism comprises a sliding bush 14 sleeved axially slidably on the spindle 1, and a sliding positioning means that is used to drive the sliding bush 14 to slide axially on the spindle 1 and can position the sliding bush axially on the spindle, with the sliding bush 14 housed in the clutch outer ring 10b. The clutch outer ring 10b is provided in a position corresponding to each of the outer gear rings 10c with a radial through hole, where a leaf spring 22 locked on the clutch outer ring 10b is provided. The leaf spring 22 is provided outside with a roller 15 that is locked thereto, and is provided inside with a ball 21 that is located in the radial through hole and can be moved radially along the same; the outer gear ring 10c is provided with a fit groove corresponding to the roller 15 (not shown in the drawing). The sliding bush 14 is provided with a rim 14a that, when the sliding bush is slid axially on the spindle 1, can be moved outward along the radial through hole by abutting the ball 21 and then press the leaf spring 22 to deform it, such that the roller 15 secured on the leaf spring 22 is moved into the fit groove, thereby making the outer gear ring secured to the clutch outer ring 10b circumferentially.

The sliding positioning means having the above function can have various structures well known in the mechanical field, such as an electromagnetic valve. In this example, the sliding positioning means has the following structure: The sliding positioning means comprises a setting bolt spring 17 sandwiched between the spindle 1 and the sliding bush 14, a central axle hole 18 provided on the spindle 1, a thimble 16 arranged in the central axle hole 18 and connected with the sliding bush 14, and a paddle (not shown in the drawing) that is fitted in contact with the thimble 16 and used for toggling the thimble to make it move axially in the central axle hole 18, with the paddle connected in transmission to a gear change hand lever (not shown in the drawing) on an electric-bike handlebar through a transmission line (not shown in the drawing).

When the motor is energized to drive the hub to rotate clockwise to drive the bike to run forward, a cyclist can operate the gear change hand lever on the handlebar and drive the paddle to act through the transmission line, with the paddle then pushing the thimble 16 to move leftward as shown in Fig. 1 along the central axle hole 18 of the spindle 1, thereby pushing the sliding bush 14 to move quantitatively along the spindle 1; alternatively, under the action of the elastic force of the setting bolt spring 17, the sliding bush 14 and the thimble 16 are pushed to move rightward as shown in Fig. 1 along the central axle hole 18 of the spindle 1. Thus, with the quantitative movement of the sliding bush 14 and the rim 14a thereon in a plurality of positions, the ball 21 in any position of the clutch outer ring 10b is made to move outward radially (the cyclist can choose himself/herself by controlling the gear change hand lever), and then press the leaf spring 22 to deform it. The leaf spring 22, after being deformed, has a tendency to drive the roller 15 secured thereto to move outward; once the clutch outer ring 10b is rotated to a corresponding angular position, the roller 15, under the action of the deforming elastic force of the leaf spring 22, will partially enter the fit groove of the outer gear ring, with the rest part still in the clutch outer ring 10b, thus making the corresponding outer gear ring locked circumferentially to the clutch outer ring 10b. Certainly, we can also specially set the groove type of the fit groove, so as to allow the outer gear ring to be locked only unidirectionally to the clutch outer ring 10b, with the structure and principle similar to the wedge-type unidirectional clutch and no longer described here in detail. Those balls 21 not in contact with the rim 14a remain in place and will not be moved outward, and the corresponding roller 15 will then not extend into the fit groove, with the corresponding outer gear ring not locked so as to allow free rotation. Based on this, it is chosen that an outer gear ring 10c with different diameter is secured to the clutch outer ring 10b circumferentially, and then the reduction ratio of the gear reduction structure is changed, i.e., the output torque of the motor rotor 4 to the hub shell 2 is changed, thus making this hub motor means have the multi-stage (three-stage in this example) internal transmission function. Besides, the cyclist can here also provide impetus through manpower to operate the motor, so as to help the motor provide additional torque for the hub shell 2 to rotate, which is achieved in the following way: At this point a cyclist pedals a bike pedal to drive the chain wheel 12 to rotate clockwise in the right viewing direction shown in Fig. 1, and then the chain wheel drives the clutch outer ring 10b and the outer gear ring 10c secured circumferentially thereto to rotate clockwise around the clutch inner ring 10a. The outer gear ring 10c can apply to the hub shell 2 the extra clockwise torque in addition to the motor rotor through the right planetary gear 9 engaging therewith. Also, because the respective outer gear rings 10c have different diameter, when the cyclist chooses to make the clutch outer ring 10b secured to different outer gear rings 10c circumferentially, the amount of the artificial impetus provided by the cyclist to this hub motor is then also different, thus achieving the multi-stage booster function of this hub motor.

When this hub motor is powered off to leave the bike in a powered-off riding mode, for the same reason, the cyclist can also operate the gear change hand lever on the handlebar, such that an outer gear ring 10c is locked to the clutch outer ring 10b circumferentially. At this point a cyclist pedals a bike pedal to drive the chain wheel 12 to rotate clockwise in the right viewing direction shown in Fig. 1, and then the chain wheel drives the clutch outer ring 10b and the outer gear ring 10c secured circumferentially thereto to rotate clockwise. Because the rotor gear 4 will not be rotated around the spindle 1 under the action of the second unidirectional clutch 11, the outer gear ring 10c will apply clockwise rotational torque to the planetary carrier 6, and then drives the hub shell 2 to rotate clockwise, thus making the bike go forward. If the cyclist pedals the pedal at a constant rotational speed, since the respective outer gear rings 10c are different from each other in diameter, when the cyclist chooses to make the clutch outer ring 10b secured to different outer gear rings 10c circumferentially, the rotational speed of the hub shell 2 is then also different, thus achieving the multi-stage internal transmission function of this hub motor. Generally, if a cyclist pursues the forward speed of the bike, he/she can choose the gear position where the outer gear ring 10c with the biggest diameter (located at the rightmost and leftmost side in Fig. 2) is secured to the clutch outer ring 10b circumferentially; if the cyclist pursues the gradeability of the bike, he/she can choose the gear position where the outer gear ring 10c with the smallest diameter (located at the rightmost and leftmost side in Fig. 2) is secured to the clutch outer ring 10b circumferentially. When the motor is not energized, the second clutch 11 between the rotor gear 4 and the spindle 1 is disengaged to allow free sliding.

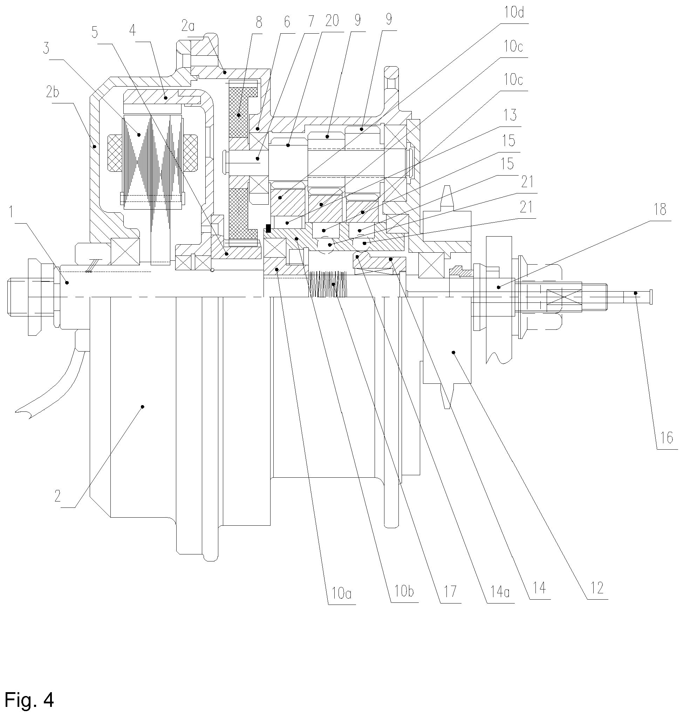

In addition, in this example, a secondary planetary gear 20 smaller than the respective right planetary gears 9 in diameter is also fixed on the planetary shaft 7, the secondary planetary gear 20 in Fig. 4 is located at the left side of all the right planetary gears 9, and a secondary outer gear ring 10d engaging with the secondary planetary gear 20 is also sleeved on the clutch outer ring10b at the right side of the left planetary gear 8, with the secondary outer gear ring 10d connected to the clutch outer ring 10b through a third unidirectional clutch 13. This third unidirectional clutch 13 also has the conventional structure, which comprises an inner ring and an outer ring locked unidirectionally thereto, the inner ring of the third unidirectional clutch being secured or connected to the clutch outer ring 10d as a whole, the outer ring of the third unidirectional clutch being secured or connected to the secondary outer gear ring 10d as a whole.

In order to prevent the high-speed sliding friction between the ball 21 and the sliding bush 14 produced due to their direct contact and relative movement during the rotational movement of the clutch inner ring 10a and the ball 21 on the swivel, this example also has the following structure: Between the sliding bush 14 and the spindle 1 is provided a supporting bearing (not shown in the drawing) having the existing conventional structure, which includes a bearing inner ring and a bearing outer ring that can be rotated relatively, the sliding bush 14 being secured to the bearing outer ring, the bearing inner ring being axially slidably sleeved on the spindle 1. Certainly, the sliding bush 14 can also be axially slidably sleeved on the bearing outer ring, and the bearing inner ring can be secured on the spindle 1, which can also achieve the same effects as above.

### Example 4:

Fig. 4 shows a fourth specific example of this electric-bike hub motor means of the present invention, which is improved on the basis of the structure of Example 3, with the main improvements as follows:
The clutch outer ring 10b does not extend at its right end out of the hub shell 2, the chain wheel 12 is directly secured and connected to the hub shell 2, and the second unidirectional clutch 11 in Example 3 is not mounted between the rotor gear 5 and the spindle 1.

### Example 5:

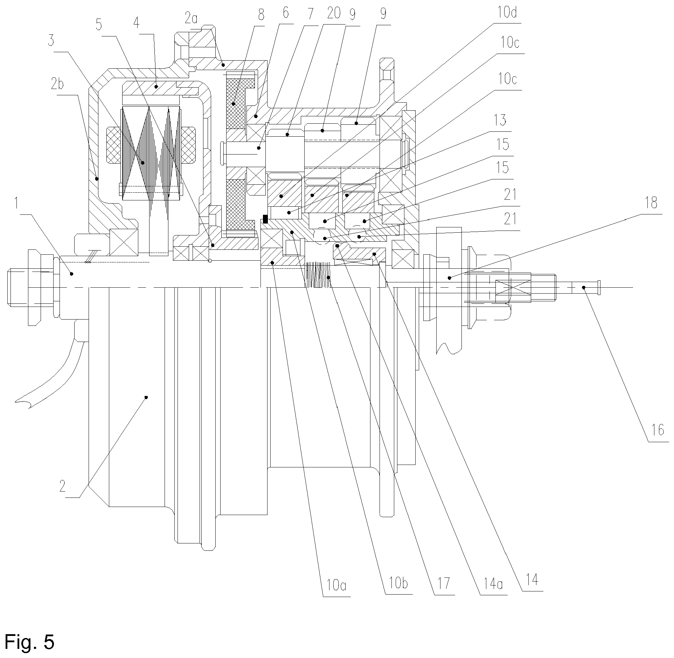

Fig. 5 shows a fifth specific example of this electric-bike hub motor means of the present invention, which is distinguished from Example 4 only in that the motor in this example is not provided with a chain wheel 12.

In Examples 1-5 described above, the words "radial" and "axial", in the absence of special note, are both based on the spindle 1 as the reference. Generally, the hub motor in Examples 1 and 4 is mostly used as a front-drive hub motor of the electric bike, while the hub motor in Examples 2, 3 and 5 is mostly used as a rear-drive hub motor of the electric bike. Besides, the planetary carrier 6 in Examples 1-5 above is integrated with the hub shell 2.

Certainly, the above examples are used only for explaining the technical concept and characteristics of the present invention. They are provided to make people understand and implement the present invention, but do not limit the scope of protection of the present invention. Any equivalent alteration or modification made according to the spiritual essence of the primary technical solution of the present invention should fall within the scope of protection of the present invention.

## Claims

1. An electric-bike hub motor means, comprising a horizontally arranged spindle (1), a hub shell (2) that is rotatably mounted outside the spindle (1), a stator (3) and a rotor (4) that are arranged inside the hub shell (2), and a gear speed reduction mechanism, with the stator (3) secured on the spindle (1);
**characterized in that**:
the gear speed reduction mechanism comprises a rotor gear (5) that is secured to the rotor (4) and arranged coaxially outside the spindle (1), a planetary carrier (6) that is secured on the hub shell (2) and sleeved outside the spindle (1), a planetary shaft (7) that goes rotatably through the planetary carrier (6), a left planetary gear (8) and a right planetary gear (9) that are secured on the planetary shaft (7), and a sun gear (10) that is secured and sleeved on the spindle (1), wherein the left planetary gear (8) engages with the rotor gear (5), and the right planetary gear (9) engages with the sun gear (10).

2. The electric-bike hub motor means according to claim 1, wherein the sun gear (10) is a unidirectional clutch comprising a clutch inner ring (10a) and a clutch outer ring (10b) locked unidirectionally thereto, wherein the clutch inner ring (10a) is secured to the spindle (1), and an outer gear tooth (10c) engaging with the right planetary gear (9) is formed on the clutch outer ring (10b).

3. The electric-bike hub motor means according to claim 2, wherein the outer gear ring (10c) is integrated with the clutch outer ring (10b).

4. The electric-bike hub motor means according to claim 2, wherein the planetary shaft (7) is provided with at least two right planetary gears (9) that are different in diameter; the clutch outer ring (10b) is provided with a plurality of outer gear rings (10c) engaging in one-to-one correspondence with the respective right planetary gears (9), with these outer gear rings (10c) sleeved rotatably circumferentially on and secured axially to the clutch outer ring (10b); and a locking mechanism is also provided between the clutch outer ring (10b) and the outer gear ring (10c) that can secure them both together circumferentially.

5. The electric-bike hub motor means according to claim 4, wherein the clutch outer ring (10b) extends at its right end out of the hub shell (2) and has a chain wheel (12), and a second unidirectional clutch (11) is provided between the rotor gear (5) and the spindle (1).

6. The electric-bike hub motor means according to claim 4, wherein the locking mechanism comprises a sliding bush (14) that can be slidably sleeved axially on the spindle (1), and a sliding positioning means that is used to drive the sliding bush (14) to slide axially on the spindle (1) and can position the sliding bush axially on the spindle, with the sliding bush (14) housed in the clutch outer ring (10b); the clutch outer ring (10b) is provided in a position corresponding to each of the outer gear rings (10c) with a radial through hole, where a leaf spring (22) locked on the clutch outer ring (10b) is provided; the leaf spring (22) is provided outside with a roller (15) that is locked thereto, and is provided inside with a ball (21) that is located in the radial through hole and can be moved radially along the same; the outer gear ring (10c) is provided with a fit groove corresponding to the roller (15); the sliding bush (14) is provided with a rim (14a) that, when the sliding bush slides axially on the spindle (1), can be moved outward along the radial through hole by abutting the ball (21) and then press the leaf spring (22) to deform it, such that the roller (15) secured on the leaf spring (22) is moved into the fit groove, thereby making the clutch gear ring (10c) secured to the clutch outer ring (10b) circumferentially.

7. The electric-bike hub motor means according to claim 6, wherein the sliding positioning means comprises a setting bolt spring (17) sleeved on the spindle (1) and sandwiched between the spindle (1) and the sliding bush (14), a central axle hole (18) provided on the spindle (1), a thimble arranged in the central axle hole (18) and connected to the sliding bush (14), and a paddle that is fitted in contact with the thimble and used for toggling the thimble to make it move axially in the central axle hole (18), with the paddle connected in transmission with a gear change hand lever on the electric-bike handlebar through a transmission line.

8. The electric-bike hub motor means according to claim 6, wherein the sliding positioning means is an electromagnetic valve.

9. The electric-bike hub motor means according to claim 4, 6, 7 or 8, wherein a secondary planetary gear (20) smaller than the respective right planetary gears (8) in diameter is also fixed on the planetary shaft (7), and a secondary outer gear ring (10d) engaging with the secondary planetary gear (20) is sleeved on the clutch outer ring (10b), with the secondary outer gear ring (10d) connected to the clutch outer ring (10b) through a third unidirectional clutch (13).

10. The electric-bike hub motor means according to claim 4, 5, 6, 7 or 8, wherein between the sliding bush (14) and the spindle (1) is provided a supporting bearing, which has relatively rotatable bearing inner ring and bearing outer ring, the sliding bush (14) being axially slidably sleeved on the bearing outer ring, the bearing inner ring being secured on the spindle (1).
